# EUROPÄISCHE PATENTANMELDUNG

(11) **EP 3 533 697 A1**
(43) Veröffentlichungstag der Anmeldung: **04.09.2019**
(21) Anmeldenummer: 19157886.3
(22) Anmeldetag: 18.02.2019
(51) Int. Cl.: B62K 21/12

(54) **ZWEIRADLENKER**

(30) Priorität: 28.02.2018 DE 202018001056 U
(71) Anmelder: Fischer, Jürgen, 72127 Kusterdingen (DE)
(72) Erfinder: Fischer, Jürgen, 72127 Kusterdingen (DE)
(74) Vertreter: Beetz & Partner mbB

(57) **Zusammenfassung**

Ein Lenkerbügel (1) eines Lenkers für ein Zweirad weist eine sich entlang einer ersten Längsachse (16) erstreckende Manschette (14) und zwei Bügelenden (17) auf. Die Bügelenden (17) erstrecken sich entlang einer gleichen, zur ersten Längsachse (16) parallel versetzten zweiten Längsachse (18).

## Beschreibung

Die vorliegende Erfindung betrifft einen Lenker für ein Zweirad, insbesondere ein Kinderfahrrad, sowie ein mit einem solchen Lenker ausgestattetes Zweirad.

Kinderfahrräder werden mit einer großen Zahl von unterschiedlichen Raddurchmessern jeweils entsprechend der Körpergröße der Kinder angeboten, wobei insbesondere für Kleinkinder mit für je 5 cm Zuwachs der Körpergröße unterschiedliche Raddurchmesser empfohlen werden. Die Größenvielfalt macht es den Herstellern schwierig, Kinderräder in wirtschaftlich attraktiven großen Serien zu fertigen und zu vermarkten. Auf Verbraucherseite führt die Notwendigkeit, im Laufe des Wachstums eines Kindes mehrere Räder in unterschiedlichen Größen zu beschaffen, zu hohen Kosten. Es ist daher wünschenswert, ein Kinderrad so zu konstruieren, dass es an stark unterschiedliche Körpergrößen seiner Benutzer angepasst werden kann.

Eine Anpassung an unterschiedliche Beinlängen ist herkömmlicherweise durch Herausziehen einer Sattelstütze in weitem Umfang möglich, da diese mit dem Sattelrohr auf großer Länge überlappt. Eine entsprechende Verstellung des Lenkers am Gabelschaftrohr ist jedoch nicht möglich, sodass dieser dem Größenwachstum der Kinder nicht folgen kann. Ein hochgestellter Sattel zwingt daher zu einer unbequemen, stark vornübergeneigten Körperhaltung.

Die vorliegende Erfindung löst das Problem einer unzureichenden Höhenverstellbarkeit des Lenkers durch einen Lenkerbügel, der eine sich entlang einer ersten Längsachse erstreckende Manschette zur Befestigung an einem Vorbau sowie zwei Bügelenden aufweist, die sich entlang einer gleichen, zur ersten Längsachse parallel versetzten zweiten Längsachse erstrecken. Infolge der Ausrichtung entlang der gleichen zweiten Längsachse können die Bügelenden immer unter dem gleichen Winkel mit den Händen gegriffen werden, egal unter welchem Drehwinkel in Bezug auf die erste Längsachse der Lenkerbügel am Vorbau montiert ist. Mit anderen Worten können die Bügelenden auf einem sich um die erste Längsachse erstreckenden Kreis beliebig platziert und dadurch an die Körpergröße eines Benutzers angepasst werden.

Um eine spürbare Wirkung zu erzielen und das Intervall der Körpergrößen, für die ein Fahrrad geeignet ist, spürbar zu vergrößern, sollte der Versatz zwischen der ersten und der zweiten Längsachse wenigstens 20 mm betragen.

Andererseits sollte der Versatz nicht größer sein als 50 mm, um zu verhindern, dass in einer Stellung des Lenkers, in der sich beide Achse in etwa auf gleicher Höhe befinden, der Fahrer zu einer unbequemen vorgestreckten Körperhaltung gezwungen ist oder die Bügelenden den Knien des Fahrers zu nahe kommen.

Der Lenkerbügel ist typischerweise aus einem Metallrohr einteilig geformt.

Um eine bequeme Handhaltung in jeder Stellung des Lenkerbügels zu ermöglichen, kann an den Bügelenden jeweils ein Griff lösbar befestigt und im gelösten Zustand um die zweite Längsachse drehbar sein.

Insbesondere kann ein solcher Griff in einem Schnitt entlang der zweiten Achse in Bezug auf die zweite Achse in einer gleichen Richtung geschwenkte Außenflächen aufweisen, sodass sich die Griffe dem Fahrer in einer ähnlichen Orientierung darbieten wie bei einem herkömmlichen, geschwungenen Lenkerbügel.

Ein weiterer Bestandteil des Lenkers kann der bereits erwähnte Vorbau sein, in dem die Manschette lösbar aufgenommen sein sollte, sodass sie im gelösten Zustand um die erste Längsachse drehbar ist.

Insbesondere sollte der Lenkerbügel in eine Position drehbar sein, in der die zweite Längsachse unterhalb der ersten Längsachse verläuft. Dadurch wird das Fahrrad für einen Nutzer von geringer Körpergröße gut handhabbar, und kann daher für ein kleines Kind "auf Zuwachs" angeschafft werden.

Der Vorbau ist bei einem herkömmlichen Lenker meist geformt, um die Manschette in Fahrtrichtung vor einer Lenkachse der Lenkergabel zu halten, sodass, wenn die Bügelenden nach hinten abgewinkelt sind, diese Schwenkachse in etwa zwischen den die Bügelenden greifenden Händen des Fahrers liegt. Um eine ähnliche Platzierung relativ zur Schwenkachse auch beim erfindungsgemäßen Lenker zu ermöglichen, sollte der Abstand zwischen der ersten Längsachse und der Lenkachse um nicht mehr als 50% vom Abstand zwischen den zwei Längsachsen abweichen.

Der Raddurchmesser eines erfindungsgemäßen Zweirads wird im Allgemeinen nicht über 24 Zoll betragen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht eines erfin-dungsgemäßen Kinderfahrrads;
- Fig. 2: eine Draufsicht auf einen Lenkerbügel des Fahrrads; und
- Fig. 3: eine schematische Ansicht eines mit einem Griff ausgestatteten Bügelendes.

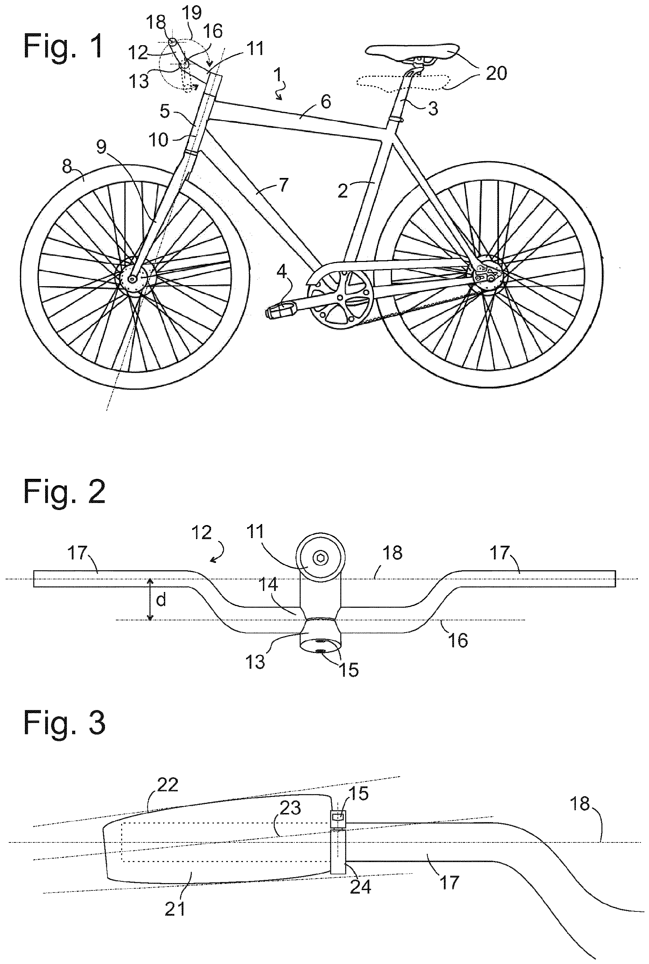

Fig. 1 zeigt ein erfindungsgemäßes Kinderrad in einer Seitenansicht. Das Fahrrad hat einen Rahmen 1 von herkömmlicher Bauart mit einem Sattelrohr 2, in dem eine Sattelstütze 3 höhenverstellbar aufgenommen ist, einem kurzen Gabelschaftrohr 5 sowie Ober- und Unterrohre 6, 7, die die oberen bzw. unteren Ende von Sattelrohr 2 und Gabelschaftrohr 5 miteinander verbinden. Fig. 1 zeigt ein Tretlager und Pedale 4 am unterem Ende des Sattelrohrs 2; insbesondere ein Fahrrad für Kleinkinder kann aber auch als Laufrad ausgebildet sein, das durch Abstoßen der Füße vom Boden fortbewegt wird und ohne Pedale auskommt.

Eine ein Vorderrad 8 haltende Gabel 9 ist im Gabelschaftrohr 5 um eine Lenkachse 10 schwenkbar aufgenommen und mit einem Vorbau 11 verbunden, der am oberen Ende aus dem Gabelschaftrohr 5 herausragt. Der Vorbau 11 hat einen sich entlang der Lenkachse 10 erstreckenden Schaftabschnitt sowie einen von der Lenkachse 10 in Fahrtrichtung vorspringenden Arm, an dessen vorderem Ende ein Lenkerbügel 12 in einer Schelle 13 gehalten ist.

Fig. 2 zeigt eine Draufsicht auf den Lenkerbügel 12 und den Vorbau 11. Die Schelle 13 umfasst hier zwei Halbschalen, die eine Manschette 14 des Lenkerbügels 12 auf jeweils etwa der Hälfte ihres Umfangs umgreifen und mit Hilfe von Schrauben 15 gegeneinander gespannt sind, um die Manschette 14 drehfest zu klemmen. Wenn die Schrauben 15 gelockert sind, ist die Manschette 14 in der Schelle 13 um ihre Längsachse 16 drehbar.

Die Bügelenden 17 des Lenkerbügels 12 erstrecken sich entlang einer gemeinsamen Längsachse 18, die in einem Abstand von 35 mm parallel zur Längsachse 16 der Manschette 14 verläuft. Eine Kreisbahn, auf der die Längsachse 18 um die Längsachse 16 beweglich ist, ist in Fig. 1 mit 19 bezeichnet.

Fig. 1 zeigt mit durchgezogenen Linien den Lenkerbügel 12 in einer für ein größeres Kind passenden Stellung, in der sich die Längsachse 18 sowohl oberhalb als auch in Fahrtrichtung in geringem Abstand vor der Längsachse 16 erstreckt. Um das Fahrrad für ein kleineres Kind passend zu machen, kann einerseits, wie durch einen gestrichelten Umriss des Sattels 20 veranschaulicht, die Sattelstütze 3 in das Sattelrohr 2 eingeschoben werden, zum anderen kann in Anpassung an die tiefere Stellung des Sattels 20 auch die Längsachse 18 der Bügelenden 17 durch Drehen um die Längsachse 16 tiefergelegt werden, insbesondere, wie in der Figur durch einen gestrichelten Umriss gezeigt, in eine Stellung unterhalb der Längsachse 16. Die Stellung, in der die Hände des Kindes die Bügelenden 17 greifen, ist aufgrund der Parallelität der Bügelenden 17 in jeder Orientierung, die der Lenkerbügels 12 relativ zur Längsachse 16 einnehmen kann, die gleiche.

Wie in Fig. 3 gezeigt, können die Bügelenden 17 zur Erhöhung des Komforts mit Griffen 21 bestückt sein. Im einfachsten Fall sind die Außenflächen der Griffe 21 Rotationsflächen, die durch Rotation einer Außenkontur 22 um eine gegen die Längsachse 18 geneigte Achse 23 gebildet sind. Komplexere, ergonomische Formen der Griffe 21 kommen natürlich ebenfalls in Betracht.

Die Bügelenden 17 sind jeweils in gegen die Achse 23 geneigten Aussparungen der Griffe 21 aufgenommen, die Griffe 21 sind um die Längsachse 18 drehbar, um sie in eine Orientierung zu bringen, in der sie bequem greifbar sind; in dieser Orientierung können sie mit Hilfe von Schellen 24 drehfest am Lenkerbügel 12 fixiert werden.

Wenn zur Anpassung an das Wachstum des Kindes der Lenkerbügel 12 um die Längsachse 16 gedreht wird, werden a priori auch die Achsen 23 mitgedreht. Durch Lösen der Schellen 24 können jedoch anschließend die Griffe 21 wieder um die Bügelenden 17 zurückgedreht werden, sodass die Orientierung der Achse 23 im Raum wiederhergestellt werden kann.

### Bezugszeichen

- 1: Rahmen
- 2: Sattelrohr
- 3: Sattelstütze
- 4: Tretlager
- 5: Gabelschaftrohr
- 6: Oberrohr
- 7: Unterrohr
- 8: Vorderrad
- 9: Gabel
- 10: Lenkachse
- 11: Vorbau
- 12: Lenkerbügel
- 13: Schelle
- 14: Manschette
- 15: Schraube
- 16: Längsachse
- 17: Bügelende
- 18: Längsachse
- 19: Kreisbahn
- 20: Sattel
- 21: Griff
- 22: Außenkontur
- 23: Achse
- 24: Schelle

## Patentansprüche

1. Lenker für ein Zweirad, mit einem Lenkerbügel (1), der eine sich entlang einer ersten Längsachse (16) erstreckende Manschette (14) und zwei Bügelenden (17) aufweist, **dadurch gekennzeichnet, dass** die Bügelenden (17) sich entlang einer gleichen, zur ersten Längsachse (16) parallel versetzten zweiten Längsachse (18) erstrecken.

2. Lenker nach Anspruch 1, **dadurch gekennzeichnet, dass** der Versatz zwischen der ersten Längsachse (16) und der zweiten Längsachse (18) wenigstens 20 mm beträgt.

3. Lenker nach Anspruch 1 oder 2, **dadurch gekennzeichnet, dass** der Versatz zwischen der ersten Längsachse (16) und der zweiten Längsachse (18) höchstens 50 mm beträgt.

4. Lenker nach einem der vorhergehenden Ansprüche, **dadurch gekennzeichnet, dass** der Lenkerbügel (1) aus einem Metallrohr einteilig geformt ist.

5. Lenker nach einem der vorhergehenden Ansprüche, **dadurch gekennzeichnet, dass** an den Bügelenden (17) jeweils ein Griff (21) lösbar befestigt und im gelösten Zustand um die zweite Längsachse (18) drehbar ist.

6. Lenker nach Anspruch 5, **dadurch gekennzeichnet, dass** der Griff (21) in einem Schnitt entlang der zweiten Achse (18) in Bezug auf die zweite Achse (18) in einer gleichen Richtung geschwenkte Außenkonturen (22) aufweist.

7. Lenker nach einem der vorhergehenden Ansprüche, **dadurch gekennzeichnet, dass** die Manschette (14) in einem Vorbau (11) lösbar aufgenommen und im gelösten Zustand um die erste Längsachse (16) drehbar ist.

8. Zweirad mit einem Lenker nach Anspruch 7, **dadurch gekennzeichnet, dass** der Lenkerbügel (1) in eine Position drehbar ist, in der die zweite Längsachse (18) unterhalb der ersten Längsachse (16) verläuft.

9. Zweirad nach Anspruch 8, **dadurch gekennzeichnet, dass** der Abstand zwischen der ersten Längsachse (16) und einer Lenkachse (15) um maximal 50% vom Abstand zwischen den Längsachsen (16, 18) abweicht.

10. Zweirad mit einem Lenker nach einem der vorhergehenden Ansprüche, **dadurch gekennzeichnet, dass** es einen Raddurchmesser von maximal 24" hat.
